# NEUE EUROPÄISCHE PATENTSCHRIFT

(11) **EP 2 141 892 B2**
(45) Veröffentlichungstag und Bekanntmachung des Hinweises auf die Entscheidung über den Einspruch: **06.03.2019**
(45) Hinweis auf die Patenterteilung: 18.05.2016
(21) Anmeldenummer: 08022122.9
(22) Anmeldetag: 19.12.2008
(51) Int. Cl.: H04L 29/08, H04L 12/28, G01D 4/00, H04Q 9/00

(54) **EINRICHTUNG ZUR ÜBERTRAGUNG UND ANZEIGE VON ERFASSTEN VERBRAUCHSDATEN EINES VERSORGUNGSMEDIUMS UND ENTSPRECHENDES VERFAHREN**
Device for transferring and displaying recorded consumption data information of a supply medium and corresponding method
Dispositif de transmission et d'affichage de données de consommation d'une ressource distribuée et procédé correspondant

(30) Priorität: 13.03.2008 DE 102008014013
(43) Veröffentlichungstag der Anmeldung: 06.01.2010
(73) Patentinhaber: Diehl Metering GmbH, 91522 Ansbach (DE)
(72) Erfinder: Pokorny, Harald, 90562 Heroldsberg (DE); Spörl, Sebastian, 90419 Nürnberg (DE); Trottler, Hermann, 91722 Arberg (DE)
(74) Vertreter: Blaumeier, Jörg

(56) Entgegenhaltungen:
- EP-A1- 0 924 949
- EP-A1- 0 924 949
- EP-A1- 1 959 650
- EP-A1- 1 959 650
- WO-A1-02/084309
- WO-A1-02/084309
- WO-A1-2007/063161
- WO-A1-2007/063161
- GB-A- 2 394 077
- GB-A- 2 394 077
- US-A1- 2001 039 537
- US-A1- 2001 039 537
- US-A1- 2004 059 585
- US-A1- 2004 059 585
- US-A1- 2004 176 141
- US-A1- 2004 176 141
- YU-WEI HUANG ET AL: "GPRS-Based Embedded Remote Power Management System" SENSORS FOR INDUSTRY CONFERENCE, 2005, IEEE, PI, 1. Februar 2005 (2005-02-01), Seiten 105-110, XP031027748 ISBN: 978-1-4244-0298-4
- MICHAEL LEMAY ET AL: "Unified Architecture for Large-Scale Attested Metering" SYSTEM SCIENCES, 2007. HICSS 2007. 40TH ANNUAL HAWAII INTERNATIONAL CO NFERENCE ON, IEEE, PI, 1. Januar 2007 (2007-01-01), Seiten 115-115, XP031013435 ISBN: 978-0-7695-2755-0
- YU -WEI HUAN et al.: "GPRS-Based Embedded Remote Power Management System", Sicon/05 -Sensors for Industry Conference, 8 February 2005 (2005-02-08), - 10 February 2005 (2005-02-10), pages 105-110, XP031027748, ISBN: 978-1-4244-0298-4
- MICHAEL LEMAY et al.: "Unified Architecture for Large-Scale Attested Metering", SYSTEM SCIENCES, 2007. HICSS 2007. 40 TH ANNUAL HAWAII INTERNATIONAL CO NFERENCE ON, IEEE , Pl, 3 January 2007 (2007-01-03), page 115, XP055356404, ISBN: 978-0-7695-2755-0

## Beschreibung

Die Erfindung betrifft eine Einrichtung zur Übertragung und Anzeige von erfassten Verbrauchsdaten eines Versorgungsmediums.

Üblicherweise sind verbraucherseitig verschiedene Messeinrichtungen vorgesehen, um den Verbrauch unterschiedlicher Medien wie Wasser, Strom, Gas etc. zu erfassen. Die entsprechenden Messeinrichtungen sind stets dem jeweiligen Verbraucher, im Folgenden Teilnehmer genannt, zugeordnet, sei es, dass die Messeinrichtung in einem Einfamilienhaus vorgesehen sind, sei es, dass es sich um ein Gebäude mit mehreren Einwohnern handelt, wo dann eine entsprechende Vielzahl von Messeinrichtungen vorgesehen ist. Die erfassten Messdaten werden seitens eines oder mehrerer Versorgungsunternehmen, die die Verbrauchsmedien zur Verfügung stellen, oder Netzbetreibern oder Dienstleistern aufgenommen. Dies erfolgte früher durch direktes Ablesen der Zählerstände der Messeinrichtungen, bekannt ist es aber auch, die Messdaten per Funk auszulesen und an eine zentrale Erfassungsstelle zu senden, wo die Messdaten dann entweder unmittelbar ausgewertet werden, oder von wo aus die Messdaten dann an die entsprechenden unterschiedlichen Versorger verteilt werden. In jedem Fall wird anhand der Messdaten der Verbrauch des jeweiligen Teilnehmers ermittelt und darauf basierend die Abrechnung erstellt. Den tatsächlichen Verbrauch erfährt der Teilnehmer üblicherweise erst dann, wenn ihm die Abrechnung übermittelt wird. Es laufen jedoch Bestrebungen, dem Verbraucher eine Einsichtmöglichkeit für seine Verbrauchswerte über einen teilnehmerseitigen Computer mit Internetzugang auf einer Internetseite des Versorgers zu ermöglichen. Hierüber soll der Teilnehmer seine Verbrauchswerte, soweit dort vorhanden, begutachten können. Nachteilig ist insoweit, dass, neben laufenden Verbindungskosten, dies zum einen nur für Teilnehmer möglich ist, die über einen entsprechend ausgerüsteten Computer respektive das entsprechende know how verfügen. Zum anderen hängt der Informationsumfang, der begutachtet werden kann, davon ab, was der Versorger zur Verfügung stellt, d. h., wie häufig er die Verbrauchswerte aktualisiert und welche Daten er dort einstellt, so dass die Aktualität und Transparenz nur gering sein wird.

Aus den Druckschriften EP 1 959 650 A1 und WO 2007 063 161 A1 ist ein System zur drahtlosen Steuerung von Geräten bekannt, insbesondere in Form eines Mobiltelefons. Das Mobiltelefon umfasst ein Kurzstrecken-Funkmodul, über welches eine Verbindung mit den verschiedenen Geräten herstellbar ist. Dem Mobiltelefon ist ein Speichermittel zugehörig, in dem verschiedene Befehle zur Steuerung, Aktivierung, und Auslesung von gerätespezifischen Daten der Geräte hinterlegt sind.

Aus der Veröffentlichung YU-WEI HUANG ET AL: "GPRS-Based Embedded Remote Power Management System" ist ein System zur ferngesteuerten Strommessung mittels eines Handys bekannt. Dabei werden über einen Analog-/Digitalwandler gewonnene Messwerte über eine GPRS-Verbindung an das implementierte System und weiter an eine Steuerungseinrichtung gesendet. Im Falle einer Überbelastung kann ferner ein Alarmsignal über das Handy ausgegeben werden.

Das Dokument US 2004 0 059 585 A1 offenbart ein Verfahren zur Fernsteuerung eines Zählers, welches nach folgenden Schritten abläuft: Zuordnen einer spezifischen physischen sowie elektronischen Nummer an den Zähler, Herstellung einer Verbindung des Zählers mit einer Datenbank über das Internet, Speichern der zählerspezifischen Nummern in der Datenbank sowie Speicherung von Informationen bezüglich des dem Zähler zugeordneten Benutzerkontos, Speichern von speziellen Meßplänen bzw. Meßintervallen, in denen Verbrauchswerte gemessen werden sollen in der Datenbank und Übertragen dieser auf den Zähler, so dass in gegebenen zeitlichen Intervallen Verbrauchswerte gespeichert und zu vorbestimmten Zeiten an die Datenbank gesendet werden.

Aus US 2001 0 39 5 37 A1 ist ein netzwerkbasiertes System zum Auslesen der von teilnehmerseitig installierten Messeinrichtungen erfassten, den Verbrauch betreffenden Messdaten bekannt, umfassend einen Netzwerk-Server, welcher über ein Internet-Protokoll mit einem Netzwerk verbunden ist und ein netzwerkfähiges Messgerät. Dort kann eine von der Messeinrichtung an das Netzwerk gesendete Schnittstelle von einem Teilnehmer oder einer teilnehmerseitigen Anwendung heruntergeladen werden, woraufhin eine direkte Übertragung von von dem Messgerät erfassten Messdaten über eine Kommunikation zwischen dem Teilnehmer und dem entsprechenden Messgerät möglich ist.

Die Veröffentlichung MICHAEL LEMAY ET AL: "Unified Architecture for Large-Scale Attested Metering" SYSTEM SCIENCES, 2007. HICSS 2007,40TH ANNUAL HAWAII INTERNATIONAL CONFERENCE ON, IEEE, PI, 1. Januar 2007, Seiten 115-115, ISBN: 978-0-7695-2755-0 zeigt ein Prinzip, wonach Verbrauchsdaten in verschlüsselter Form zwischen einer mobilen teilnehmerseitigen Sende- und Empfangseinrichtung, wie einem Handy, und einem Netzwerk ausgetauscht werden, um einen Schutz gegenüber unerwünschten Zugriffen Dritter auf die teilnehmerbezogenen Verbrauchsdaten zu gewährleisten.

Der Erfindung liegt damit das Problem zugrunde, eine Einrichtung anzugeben, die dem Teilnehmer auf einfache Weise eine Einsicht in seine Verbrauchsdaten ermöglicht.

Zur Lösung dieses Problems ist eine Einrichtung zur Übertragung und Anzeige von erfassten Verbrauchsdaten eines Versorgungsmediums vorgesehen, umfassend eine oder mehrere der Erfassung der Verbrauchsdaten eines Mediums dienende und einem Teilnehmer zugeordnete Messeinrichtungen, die mit einer Sendeeinrichtung zur drahtlosen Übertragung der Verbrauchsdaten kommunizieren, sowie eine mobile teilnehmerseitige Sende- und Empfangseinrichtung und eine seitens wenigstens eines ein oder mehrere Versorgungsmedien zur Verfügung stellenden Versorgers vorgehaltene Datenverarbeitungseinrichtung enthaltend teilnehmerspezifische Konfigurationsdaten zum Konfigurieren der teilnehmerseitigen Sende- und Empfangseinrichtung derart, dass nach Übertragung der Konfigurationsdaten und Konfiguration der Sende- und Empfangseinrichtung mittels der Konfigurationsdaten die Sende- und Empfangseinrichtung überhaupt erst in der Lage ist, die gesendeten Verbrauchsdaten zu empfangen und anschließend je nach Konfiguration anhand der hierüber definierten Verarbeitungs- und Auswertemöglichkeiten zu verarbeiten, wobei die Konfigurationsdaten drahtlos über eine Internet-Verbindung von der Sende- und Empfangseinrichtung abrufbar sind, wobei durch eine Konfiguration der Sende- und Empfangseinrichtung über die Konfigurationsdaten derart sichergestellt wird, dass bei Empfang von mehreren Teilnehmern zugeordneten Verbrauchsdaten die Sende- und Empfangseinrichtung zum Selektieren und Verarbeiten ausschließlich der teilnehmerbezogenen Verbrauchsdaten ausgebildet ist, wobei eine Kennung verwendet wird, die sowohl seitens der Verbrauchsdaten als auch seitens der Konfigurationsdaten vorhanden ist, so dass ein Teilnehmer nur seine Verbrauchsdaten speichern und verarbeiten kann.

Die Erfindung sieht den Einsatz einer teilnehmerseitigen Sende- und Empfangseinrichtung vor, bei welcher es sich um ein elektronisches Gerät handelt, das ohnehin bereits im Besitz einer Vielzahl von Teilnehmern ist und üblicherweise einem anderen Zweck dient, jedoch auf einfache Weise für den erfindungsgemäßen Einsatz konfiguriert werden kann. Eine solche Sende- und Empfangseinrichtung ist in einer besonders bevorzugten Ausführungsform ein Handy oder ein PDA, also Gerätschaften, über die ohnehin bereits eine Vielzahl von Teilnehmern verfügen. Diese Geräte dienen bekanntlich anderen Zwecken und sind insbesondere nicht in der Lage, die per Funk übertragenen Verbrauchsdaten zu empfangen, werden jedoch erfindungsgemäß als Teil der erfindungsgemäßen Einrichtung genutzt bzw. eingebunden, indem ihre Funktionalität auf schnelle und einfache Weise angepasst werden kann. Denn erfindungsgemäß werden die Sende- und Empfangseinrichtungen derjenigen Teilnehmer, die Zugang zu ihren eigenen Verbrauchsdaten haben wollen, durch Übertragung geeigneter Konfigurationsdaten zum Empfangen und Verarbeiten der von der im Haus oder benachbart befindlichen Sendeeinrichtung gesendeten Verbrauchsdaten konfiguriert. Dies geschieht auf einfache Weise über das Internet, worüber ohne weiteres entsprechende Konfigurationsdaten übertragen werden können. Es ist lediglich erforderlich, dass die Sende- und Empfangseinrichtung eine internetfähige Schnittstelle aufweist. Die Konfigurationsdaten werden vom Versorger bereitgestellt. Zum Übertragen wählt sich der Teilnehmer lediglich auf eine entsprechende Internet-Seite des Versorgers ein und authentifiziert sich beispielsweise durch Eingabe einer bestimmten Codenummer oder dergleichen, die ihm der Verbraucher bereits früher z. B. als Kundennummer oder dergleichen zugeordnet hat. Sodann werden die Konfigurationsdaten, die der Versorger erstellt und über die der Versorger letztlich auch den Umfang und die Art und Weise, wie die Daten eingesehen werden können, definieren kann, übertragen. Erst nach Übertragung dieser Konfigurationsdaten ist die Sende- und Empfangseinrichtung, also beispielsweise das Handy, überhaupt in der Lage, die per Funk von der im Haus befindlichen Sendeeinrichtung übertragenen Verbrauchsdaten empfangen und anschließend je nach Konfiguration anhand der hierüber definierten Verarbeitung- und Auswertemöglichkeiten zu verarbeiten. Die Verarbeitungsmöglichkeiten können beliebig sein, so dass der Teilnehmer beispielsweise zeitliche Vergleiche vornehmen kann zwischen aktuellen Verbrauchswerten und früheren Verbrauchswerten, dass er etwaige Verbrauchsspitzen erfassen kann, dass er sich Diagramme wie Balken- oder Kuchendiagramme etc. erzeugen und anzeigen lassen kann usw. Auswertungen z.B. wöchentlichen, monatlichen oder jährlichen Zeitintervallen sind möglich. Diese Verarbeitungsmöglichkeiten können beispielsweise in einem entsprechenden File seitens des Handys oder des PDA's oder dergleichen abgelegt werden, oder im Falle eines Handys beispielsweise unter dem File "Dienste" etc.

Auch der Umfang bzw. die Art der Daten, die über die teilnehmerseitige Sende- und Empfangseinrichtung verarbeitet werden können, wird über die Konfigurationsdaten definiert. Die Sendeeinrichtung in einem Mehrparteienhaus erfasst sämtliche Verbrauchsdaten aller dort befindlichen Messeinrichtungen und überträgt diese üblicherweise in einem nur wenige Sekunden dauernden Takt. Die einzelnen Verbrauchsdaten sind selbstverständlich mit entsprechenden Teilnehmerkennungen versehen und hierüber identifizierbar. Nach Konfiguration der Sende- und Empfangseinrichtung muss sichergestellt werden, dass der Teilnehmer nur seine Verbrauchsdaten speichern und verarbeiten kann. Dies geschieht über die Konfigurationsdaten, die so aufbereitet sind bzw. definieren, dass das Handy oder dergleichen nur Zugriff auf die z.B. über die Teilnehmerkennung identifizierbaren Teilnehmer-Verbrauchsdaten hat bzw. nur diese speichert, wenngleich es aber sämtliche von der Sendeeinrichtung übertragenen Verbrauchsdaten empfängt. Das heißt, die Datenselektion erfolgt seitens der Sende- und Empfangseinrichtung im Rahmen der Verarbeitungstätigkeit, nicht jedoch im Rahmen des grundsätzlichen Datenempfangs. Hierüber wird sichergestellt, dass tatsächlich nur die Daten verarbeitet werden, die der Teilnehmer einsehen darf. Dies über die Konfigurationsdaten zu regeln, ist besonders einfach und kann versorgerseitig softwaretechnisch erfolgen, das heißt, dass keine aufwändigen Tätigkeiten vor Ort zum Programmieren der hausseitigen Sendeeinrichtung, die allen dortigen Teilnehmern zugeordnet ist und die Daten für alle Teilnehmer sendet, vorzunehmen sind.

Insgesamt bietet die erfindungsgemäße Einrichtung auf äußerst einfache Weise die Möglichkeit, für eine Vielzahl von Teilnehmern die Einsichtmöglichkeit zu gestatten, ohne dass hierfür besondere Gerätschaften erforderlich sind oder versorgerseitig in aufwendiger Weise vor Ort etwaige Geräte zu installieren oder Programmiertätigkeiten vorzunehmen sind. Mit besonderem Vorteil werden Gerätschaften, die ohnehin teilnehmerseitig vorhanden sind und anderen Zwecken dienen, durch eine einfache Konfigurationsmaßnahme "aufgerüstet", um in der erforderlichen Weise Funkdaten aufzunehmen, gegebenenfalls zu selektieren, und zu verarbeiten. Auch für den Verbraucher sind damit keinerlei Umstände verbunden, insbesondere ist er nicht gefordert, sich eine besondere Gerätschaft oder dergleichen zu kaufen, da auf sein ohnehin vorhandenes Handy oder dergleichen aufgesetzt wird. Nachdem diese Geräte auch sehr weit verbreitet sind und ein Großteil der Verbraucher im Besitz eines solchen ist, besteht ferner die Möglichkeit, vielen Verbrauchern den vorteilhaften Zugang zur Eigenauswertung zu ermöglichen.

Die Verbrauchsdaten können als nicht-übertragbare read-only-Daten in der Sende- und Empfangseinrichtung nach dem Empfang abgelegt werden. Hierüber wird sichergestellt, dass die Daten über das Handy oder dergleichen nicht beliebig verteilt, also multipliziert werden können, sondern beim Teilnehmer remanent und nur auswert- und ansehbar verbleiben. Über die Konfigurationsdaten wird also eine Sendesperre für diese Daten implementiert. Denkbar wäre aber auch, eine Übertragung zuzulassen, um die Daten z.B. auf einen lokalen Computer zur Darstellung oder Verarbeitung zu übertragen.

Die Sendeeinrichtung überträgt die Verbrauchsdaten entweder kontinuierlich oder intermittierend, wobei eine solche intermittierende Datenübertragung beispielsweise in einem mehrere Sekunden oder Minuten dauernden Takt erfolgen kann. Die Sende- und Empfangseinrichtung wird zweckmäßigerweise so konfiguriert, dass sie kontinuierlich empfängt, wenn sie eingeschaltet ist. Auf diese Weise können über einen beliebigen Zeitraum Daten kumuliert werden und ohne Weiteres auch länger zurückreichende historische Auswertungen vorgenommen werden. Dabei kann lediglich ein Teil der über ein konfigurierbares Zeitraster definierten Verbrauchsdaten abspeicherbar sein. D. h, dass beispielsweise nur einmal pro Stunde der zuletzt erfasste Datensatz abgespeichert wird, während die sonstigen bis zum nächsten Speichertermin empfangenen Daten nicht abgelegt werden, um den Speicherdatenumfang zu reduzieren. Auch kann über die Konfigurationseinstellungen ohne Weiteres definiert werden, wie lange gespeicherte Verbrauchsdaten gespeichert bleiben sollen, etc. D. h., dass der Teilnehmer über die entsprechende Einrichtungskonfiguration jede Möglichkeit hat, den vorhandenen Datenumfang sowohl verarbeitungs- als auch speichertechnisch zu definieren.

Wenn der Teilnehmer historische, also ältere Verbrauchsdaten nicht allzu lange speichern möchte, ihn jedoch bestimmte Auswertungen trotzdem interessieren, die auf historische Verbrauchsdaten zurückgreifen, so sieht eine zweckmäßige Weiterbildung der Erfindung vor, dass historische Verbrauchsdaten drahtlos von der versorgerseitigen Datenverarbeitungseinrichtung abrufbar sind. D. h., dass der Teilnehmer die Möglichkeit hat, solche Daten vom Versorger über die Internet-Verbindung abzurufen, soweit der Versorger solche Verbrauchsdaten bereitstellt.

Weiterhin kann die Sende- und Empfangseinrichtung zur Gabe eines Alarmsignals in Abhängigkeit eines Verarbeitungsergebnisses ausgebildet sein. D. h., dass eine Alarmschwelle bezogen auf eine bestimmte Verarbeitungsweise oder eine bestimmte Auswerte- und Analyseweise im Hinblick auf das entsprechende Ergebnis konfigurierbar ist. Beispielsweise kann der Teilnehmer eine maximale Verbrauchsschwelle definieren, bei deren Erreichen ein Alarmsignal ausgegeben wird, das ihm anzeigt, dass im Moment ein extrem hoher Verbrauch gegeben ist, der möglicherweise auf einen Defekt zurückzuführen sein kann. Denkbar wäre beispielsweise ein sehr hoher oder lang andauernder Wasserverbrauch, der auf ein Leck in einer Wasserleitung zurückzuführen sein kann, oder ein extrem hoher Stromverbrauch, wenn sich beispielsweise eine Vielzahl von Verbrauchern gleichzeitig einschalten, etc. D. h., dass der Anwender hierüber zu jedem Zeitpunkt eine Information im Falle etwaiger Unregelmäßigkeiten erhalten kann.

Um zu vermeiden, dass eine einmal gegebene Empfangs- und Verarbeitungsberechtigung, die über die Übertragung der Konfigurationsdaten vom Versorger gegeben wird, eine Dauerberechtigung ist, die nur schwer zu widerrufen ist, ist die Validität der Konfigurationsdaten vorzugsweise zeitlich begrenzt. D. h., dass die Konfigurationsdaten nur für z.B. 1 Jahr gültig sind, anschließend muss der Teilnehmer durch eine erneute Kontaktaufnahme mit dem Versorger über die Internet-Verbindung aktualisierte Konfigurationsdaten abrufen, wenn er diesen Dienst weiterhin nutzen möchte.

Wie beschrieben ist die mobile Sende- und Empfangseinrichtung zweckmäßigerweise ein Handy oder ein PDA, wobei diese Aufzählung nicht abschließend ist. Vielmehr kann jede, insbesondere mobile, Sende- und Empfangseinrichtung verwendet werden, die als Endgerät teilnehmerseitig in großer Zahl vorhanden ist und durch die erfindungsgemäße Konfiguration in die erfindungsgemäße Einrichtung eingebunden werden kann.

Neben der Einrichtung betrifft die Erfindung ein Verfahren gemäß Anspruch 9.

Vorteilhafte Ausgestaltungen des erfindungsgemäßen Verfahrens sind den Unteransprüchen zu entnehmen.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung einer erfindungsgemäßen Einrichtung, und
- Fig. 2: ein Flussdiagramm zur Darstellung der grundsätzlichen Verfahrensabläufe.

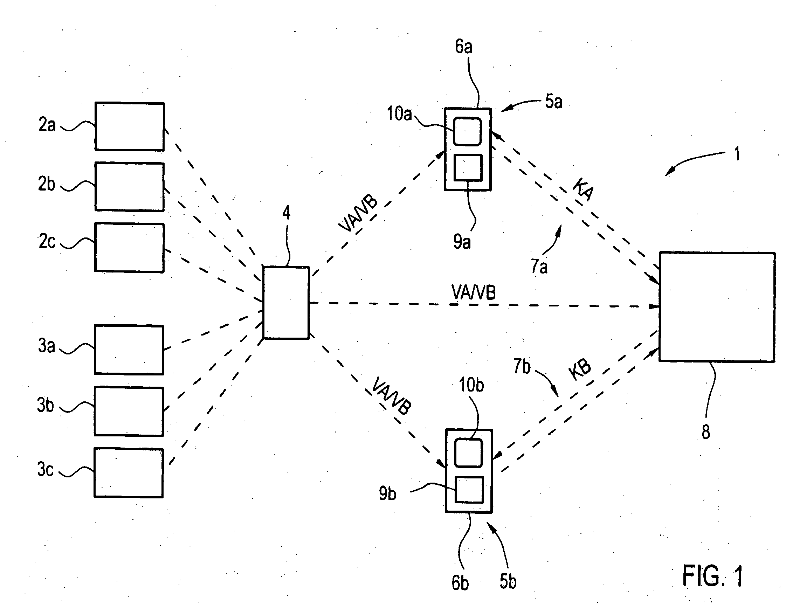

Fig. 1 zeigt eine erfindungsgemäße Einrichtung 1, umfassend mehrere Messeinrichtungen 2a, 2b und 2c sowie 3a, 3b und 3c, wobei die Messeinrichtungen 2a - 2c einem ersten Teilnehmer, im Folgenden Teilnehmer A, und die Messeinrichtungen 3a - 3c einem zweiten Teilnehmer, im Folgenden Teilnehmer B, zugeordnet sind und Verbrauchsdaten von Verbrauchsmedien ermitteln, die dem jeweiligen Teilnehmer zuzurechnen sind und für die er seine vertraglich geregelten Gebühren entrichten muss. Es sei angenommen, dass die Messeinrichtungen 2a - 2c und 3a - 3c jeweils zur Erfassung von Strom-, Gas- und Wasserverbrauchsdaten dienen.

Vorgesehen ist ferner eine Sendeeinrichtung 4, die mit allen Messeinrichtungen 2a - 2c und 3a - 3c kommuniziert, was drahtgebunden oder drahtlos per Funk erfolgen kann. Die Sendeinrichtung 4 verfügt über ein entsprechendes Empfangsmodul und nimmt die von den Messeinrichtungen 2a - 2c bzw. 3a - 3c kontinuierlich oder intermittierend übertragenen Verbrauchsdaten auf, um sie in kontinuierlichem oder intermittierendem Betrieb weiterzusenden. In diesem Beispiel sei angenommen, dass sämtliche Messeinrichtungen 2a - 2c und 3a - 3c in einem Gebäude angeordnet sind, beispielsweise einem Zwei-Familienhaus, wo sich auch die Sendeeinrichtung 4 als zentrales Empfangs- und Sendeteil befindet.

Jeder der Teilnehmer besitzt eine eigene Sende- und Empfangseinrichtung 5a, 5b. Im Vorliegenden sei angenommen, dass es sich dabei jeweils um ein Handy 6a, 6b handelt. Dieses Handy 6a, 6b verfügt über die üblichen, einem Handy zu eigenen Funktionen, insbesondere eine Funkschnittstelle wie Bluetooth oder WLAN zur Datenkommunikation. Erfindungsgemäß wird das jeweilige Handy 6a, 6b als Teil der erfindungsgemäßen Einrichtung 1 konfiguriert und in diese eingebunden. Nach dieser Konfiguration ist jedes Handy 6a, 6b in der Lage, von der Sendeeinrichtung 4, per Datenfunk übertragene Verbrauchsdaten über die Funkschnittstelle zu empfangen und auszuwerten und anzuzeigen, worauf nachfolgend noch eingegangen wird. Wenn der jeweilige Teilnehmer A bzw. B diesen Dienst oder diese Funktionalität wünscht, baut er zunächst über das Internet eine birektionale Daten- oder Kommunikationsverbindung 7a bzw. 7b zu einer Datenverarbeitungseinrichtung 8, die seitens eines Versorgers bereitgestellt bzw. von diesem betrieben wird, auf. Über die Internetverbindung 7a bzw. 7b authentifiziert sich der jeweilige Teilnehmer A bzw. B gegenüber der Datenverarbeitungseinrichtung 8, so dass diese den Teilnehmer identifizieren und verifizieren kann. Sodann beantragt der Teilnehmer A bzw. B auf einer entsprechenden Internetseite, dass über die Internetverbindung 7a bzw. 7b an sein jeweiliges Handy 6a bzw. 6b Konfigurationsdaten übertragen werden, mittels welcher das jeweilige Teilnehmerhandy 6a, 6b so konfiguriert wird, dass es die von der Sendeeinrichtung übertragenen Verbrauchsdaten empfangen und verarbeiten kann. In der Figur sind die teilnehmerbezogenen Konfigurationsdaten mit KA für den Teilnehmer A und KB für den Teilnehmer B gezeigt. Die Konfigurationsdaten werden seitens der Datenverarbeitungseinrichtung 8 bereitgehalten bzw. dort erstellt und gepflegt. D. h., dass der Versorger über die entsprechende Programmierung der Konfigurationsdaten definieren kann, welche Funktionalität das jeweilige Handy 6a, 6b hierüber neu implementiert erhält.

Die Konfigurationsdaten enthalten solche Daten, die den grundsätzlichen Empfang der von der Sendeeinrichtung 4 übertragenen Verbrauchsdaten ermöglichen. Denn die Daten werden von der Sendeeinrichtung 4 in einem Format übertragen, das ein Handy ohne spezielle Konfiguration nicht empfangen und verarbeiten kann. Dies, insbesondere die Möglichkeit zur Verarbeitung, wird erst ermöglicht, wenn die Konfigurationsdaten KA bzw. KB handyseitig vorliegen.

Die Konfigurationsdaten KA und KB umfassen ferner in jedem Fall Daten, die definieren, welche konkreten Verbrauchsdaten innerhalb des Datenkonvoluts, das von der Sendeeinrichtung 4 empfangen wird, dem jeweiligen Verbraucher A bzw. B zurechnen sind und innerhalb des Datenkonvoluts nach Konfiguration über das Handy 6a, 6b zu selektieren sind. Dies sind beispielsweise Informationen, die die Nummern der jeweiligen Messeinrichtungen, die dem jeweiligen Teilnehmer A bzw. B zugeordnet sind, enthalten oder dergleichen. In jedem Fall wird über diese Konfigurationsdaten sichergestellt, dass nur diejenigen Verbrauchsdaten überhaupt verarbeitet und angezeigt werden können, die ausschließlich dem jeweiligen Teilnehmer A bzw. B zugeordnet sind.

Darüber hinaus umfassen die Konfigurationsdaten auch beliebige weitere Daten, die die Möglichkeiten der Auswertung der empfangenen und selektierten Daten definieren, wie beispielsweise bestimmte Möglichkeiten zur Datendarstellung etc.

Sobald also die Konfigurationsdaten KA bzw. KB beim jeweiligen Handy 6a, 6b vorliegen, ist dieses grundsätzlich zum Empfang der von der Sendeeinrichtung 4 übertragenen Verbrauchsdaten sowie zum Verarbeiten und Anzeigen der Auswerteergebnisse bereit.

Die Sendeeinrichtung 4 empfängt wie beschrieben die Verbrauchsdaten der Messeinrichtungen 2a - 2c bzw. 3a - 3c und sendet diese beispielsweise intermittierenden in einem mehrere Sekunden oder Minuten dauernden Takt per Funk aus. Die Verbrauchsdaten sind hier mit VA für die den Teilnehmer A betreffenden Verbrauchsdaten und VB für die den Teilnehmer B betreffenden Verbrauchsdaten dargestellt.

Die Verbrauchsdaten VA/VB werden an die Datenverarbeitungseinrichtung 8 übertragen, die wie beschrieben versorgerseitig vorgesehen ist, da dort selbstverständlich sämtliche Verbrauchsdaten eingehen müssen, um basierend auf diesen die jeweiligen Abrechnungen für den jeweiligen Teilnehmer A und B erstellen zu können.

Darüber hinaus werden die Verbrauchsdaten VA/VB aber auch an die beiden Handys 6a, 6b übertragen. Jedes Handy 6a, 6b empfängt den gesamten Verbrauchsdatensatz VA/VB, legt jedoch nur die dem jeweiligen Teilnehmer zugeordneten Daten im jeweiligen Speicher 9a, 9b ab. Die Daten VANB werden mit jedem Sendevorgang der Sendeeinrichtung 4 empfangen, so dass sich bei Dauerempfang des jeweiligen Handys 6a, 6b kontinuierlich über die Zeit die Verbrauchsdaten ansammeln. Innerhalb des kontinuierlich eingehenden Datenstroms kann über die Konfiguration definiert werden, welche Daten tatsächlich gespeichert werden sollen, also beispielsweise durch Definition eines Zeitrasters, wonach die Daten z. B. nur im einstündigen Rhythmus abgespeichert werden oder dergleichen.

Die empfangenen Verbrauchsdaten VA/VB, werden nun, wenn sie verarbeitet werden sollen, über die übertragenen Konfigurationsdaten zunächst selektiert, derart, dass im Rahmen der Verarbeitung das Handy 6a nur die Verbrauchsdaten VA berücksichtigt und verarbeitet, und auf die Verbrauchsdaten VB seitens des Handys 6a überhaupt kein Zugriff besteht. In entsprechend umgekehrter Weise wird das Handy 6b so konfiguriert, dass dort nur Zugriff auf die Verbrauchsdaten VB besteht, nicht aber auf die Verbrauchsdaten VA. Diese Selektion kann beispielsweise darüber erfolgen, dass mit den Konfigurationsdaten KA bzw. KB wie bereits beschrieben die Nummern der Messeinrichtungen, die den jeweiligen Teilnehmer A und B zugeordnet sind, übertragen werden, so dass die jeweiligen Verbrauchsdaten VA bzw. VB hierüber selektiert werden können. Denkbar ist jede Kennung, die sowohl seitens der Verbrauchsdaten als auch innerhalb der Konfigurationsdaten vorhanden sind. Vorzugsweise ist diese Kennung mit der in der Datenverarbeitungseinrichtung 8 verwendeten Verbraucherkennung identisch.

Das jeweilige Handy 6a, 6b ist nun im Stande, je nach konfiguriertem Umfang die eingehenden Verbrauchsdaten zu verarbeiten und zu analysieren und an einem entsprechenden Display 10a, 10b anzuzeigen. Im Rahmen der Analyse können Zeitprofile erstellt werden, Diagramme, etc. In jedem Fall hat der jeweilige Teilnehmer A bzw. B die Möglichkeit, entweder aktuelle oder auch historische Informationen zu erhalten, Vergleiche vorzunehmen etc, so dass er quasi kontinuierlich den Medienverbrauch überwachen kann, er also ein Monitoring vornehmen kann. Infolge der dauernden oder häufigen Datenanzeige kann der Verbraucher ferner genau erfassen, ob und in welchem Umfang z.B. ein neuer Verbraucher den Gesamtverbrauch beeinflusst, So dass er ein zeitaufgelöstes Monitoring vornehmen kann.

Über die jeweilige Internetverbindung 7a und 7b ist es auch möglich, historische Daten, die seitens der Datenverarbeitungseinrichtung 8 vorhanden sind, auf das jeweilige Handy 6a, 6b zu übertragen, wenn dort historische Daten für die Verarbeitung und Ausführung benötigt werden, jedoch infolge einer Begrenzung der Speicherzeit der Verbrauchsdaten VA/VB dort nicht mehr vorhanden sind. D. h., dass dem Teilnehmer A bzw. B hierüber auch ein Zugriff auf bereits lange zurückliegende Verbrauchsdaten gegeben ist, soweit diese beim Versorger noch vorrätig sind. So können auch Lücken im Datenbestand, die durch fehlende Datenerfassung (z.B. wegen reisebedingter Abwesenheit) bestehen, geschlossen werden.

Die Konfigurationsdaten KA bzw. KB können in ihrer Gültigkeit zeitlich begrenzt sein, beispielsweise für ein Jahr gerechnet ab dem Übertragungszeitpunkt. Nach Ablauf dieses Jahres erhält der Teilnehmer A bzw. B von der Datenverarbeitungseinrichtung automatisch einen Hinweis, dass seine Konfigurationsdaten nicht mehr aktuell sind und aufgrund eines Zeitschlüssels die Konfiguration nicht mehr aktiv ist, mithin also auch beispielsweise keine Verbrauchsdaten VA/VB mehr empfangen werden. Der Teilnehmer A bzw. B muss dann aktuelle Konfigurationsdaten KA und KB herunterladen, wenn er den Dienst weiter nutzen möchte.

Im Rahmen der Auswertung ist es dem jeweiligen Teilnehmer A bzw. B auch möglich, Alarmschwellen zu setzen, bei Erreichen bzw. Überschreiten derer das jeweilige Handy 6a, 6b ein Alarmsignal ausgibt, so dass der Verbraucher etwaige Verbrauchsspitzen oder Unregelmäßigkeiten ohne Weiteres erkennen kann.

Der jeweilige Versorger kann durch entsprechende Programmierung der Konfigurationsdaten definieren, welche Informationen der jeweilige Teilnehmer verarbeiten kann bzw. wie die Verarbeitung grundsätzlich möglich ist. Auch obliegt es dem Versorger, zu definieren, ob bestimmte Verbrauchsdaten überhaupt verarbeitet werden können, gegebenenfalls kann er auch im Nachhinein die Konfiguration ändern, wenn der jeweilige Teilnehmer beispielsweise den Gasversorger wechselt. Der "alte" Versorger kann dann beispielsweise neue Konfigurationsdaten übertragen, die die Verarbeitung der Gasverbrauchsdaten nicht mehr zulässt. Um die Verbrauchsdaten des von einem anderen Versorger bereitgestellten Gases erneut verarbeiten zu können, müsste in diesem Fall der jeweilige Teilnehmer A bzw. B entsprechende Konfigurationsdaten vom neuen Versorger in der vorstehend beschriebenen Weise über eine Internetverbindung herunterladen, sofern der neue Versorger diese Einsichtmöglichkeit des jeweiligen Teilnehmers zulassen möchte.

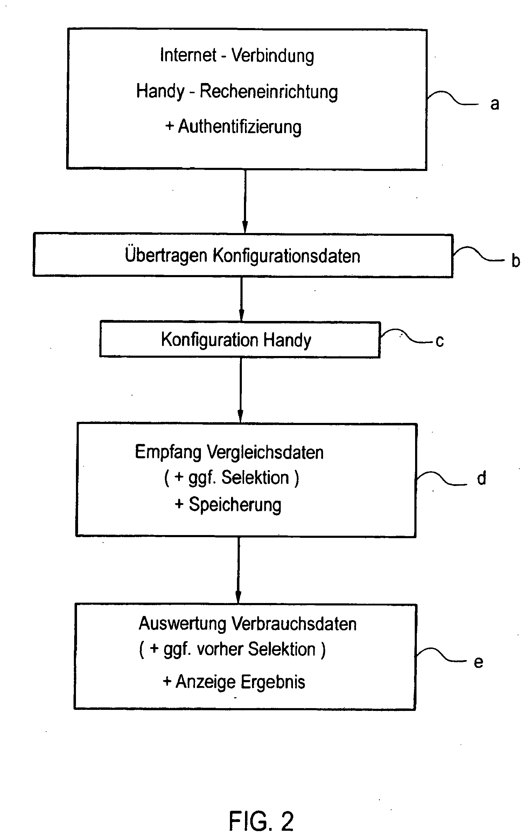

Fig. 2 zeigt ein Flussdiagramm, das in Grundzügen den Ablauf des erfindungsgemäßen Verfahrens zeigt. Sofern der jeweilige Teilnehmer seine Sende- und Empfangseinrichtung, üblicherweise ein Handy, zum Empfangen und Verarbeiten von Verbrauchsdaten konfigurieren möchte, ist zunächst, siehe Schritt a, eine Internetverbindung zwischen dem Handy und der Recheneinrichtung aufzubauen und eine Authentifizierung vorzunehmen. Anschließend, Schritt b, werden die Konfigurationsdaten von der Recheneinrichtung zum Handy übertragen, sofern die Authentifizierung erfolgreich war. Nach Empfang der Konfigurationsdaten erfolgt die grundsätzliche Konfiguration des Handys für den Empfang, etwaige Verarbeitungsparameter etc. kann der Teilnehmer handyseitig selbst definieren. Mit Schritt c ist also die Handykonfiguration abgeschlossen. Danach empfängt das Handy, wenn es eingeschaltet ist, wie im Schritt d gezeigt, die Verbrauchsdaten und speichert diese. Gegebenenfalls erfolgt die Speicherung erst nach einer vorherigen Selektion der nur diesen Teilnehmer betreffenden Verbrauchsdaten, die Verbrauchsdaten anderer Teilnehmer werden gegebenenfalls überhaupt nicht gespeichert. Die Speicherung kann zyklisch erfolgen, also beispielsweise in einem definierten Zeitraster, so dass das Speicherdatenvolumen beschränkt werden kann.

Im Schritt e schließt sich nun, wenn der Teilnehmer dies wünscht, die Auswertung der Verbrauchsdaten an, wobei diese, sofern noch nicht geschehen, spätestens dann dahingehend selektiert werden, dass nur die teilnehmerbezogenen Verbrauchsdaten selektiert und verarbeitet werden, sofern das empfangene Datenkonvolut auch Verbrauchsdaten andere Teilnehmer enthält. Die Auswerteergebnisse werden anschließend angezeigt.

## Patentansprüche

1. Einrichtung (1) zur Übertragung und Anzeige von erfassten Verbrauchsdaten (VA, VB) eines Versorgungsmediums, umfassend eine oder mehrere der Erfassung der Verbrauchsdaten eines Mediums dienende und einem Teilnehmer zugeordnete Messeinrichtungen (2a, 2b, 2c, 3a, 3b, 3c), die mit einer Sendeeinrichtung (4) zur drahtlosen Übertragung der Verbrauchsdaten (VA, VB) kommunizieren, sowie eine mobile teilnehmerseitige Sende- und Empfangseinrichtung (5a, 5b) und eine seitens wenigstens eines ein oder mehrere Versorgungsmedien zur Verfügung stellenden Versorgers vorgehaltene Datenverarbeitungseinrichtung (8) enthaltend teilnehmerspezifische Konfigurationsdaten (KA, KB) zum Konfigurieren der teilnehmerseitigen Sende- und Empfangseinrichtung (5a, 5b) derart, dass nach einer Übertragung der Konfigurationsdaten (KA, KB) und einer Konfiguration der Sende- und Empfangseinrichtung (5a, 5b) mittels der Konfigurationsdaten (KA, KB) die Sende- und Empfangseinrichtung (5a, 5b) überhaupt erst in der Lage ist, die gesendeten Verbrauchsdaten (VA, VB) zu empfangen und anschließend je nach Konfiguration anhand der hierüber definierten Verarbeitungs- und Auswertemöglichkeiten zu verarbeiten, wobei die Konfigurationsdaten (KA,KB) drahtlos über eine Internet-Verbindung (7a, 7b) von der Sende- und Empfangseinrichtung (5a, 5b) abrufbar sind, wobei durch die Konfiguration der Sende- und Empfangseinrichtung (5a, 5b) über die Konfigurationsdaten (KA, KB) sichergestellt wird, dass bei Empfang von mehreren Teilnehmern zugeordneten Verbrauchsdaten (VA, VB) die Sende- und Empfangseinrichtung (5a, 5b) zum Selektieren und Verarbeiten ausschließlich der teilnehmerbezogenen Verbrauchsdaten (VA, VB) ausgebildet ist, wobei eine Kennung verwendet wird, die sowohl seitens der Verbrauchsdaten (VA, VB) als auch innerhalb der Konfigurationsdaten (KA, KB) vorhanden ist, so dass ein Teilnehmer nur seine Verbrauchsdaten (VA, VB) speichern und verarbeiten kann.

2. Einrichtung nach Anspruch 1, **dadurch gekennzeichnet, dass** die Verbrauchsdaten (VA, VB) als nicht-übertragbare oder als übertragbare Daten in der Sende- und Empfangseinrichtung (5a, 5b) abgelegt sind.

3. Einrichtung nach Anspruch 1 oder 2, **dadurch gekennzeichnet, dass** die Sendeeinrichtung (4) die Verbrauchdaten (VA, VB) kontinuierlich oder intermittierend sendet.

4. Einrichtung nach einem der vorangehenden Ansprüche, **dadurch gekennzeichnet, dass** lediglich ein Teil der über ein konfigurierbares Zeitraster definierten Verbrauchsdaten (VA, VB) abspeicherbar sind.

5. Einrichtung nach einem der vorangehenden Ansprüche, **dadurch gekennzeichnet, dass** historische Verbrauchsdaten drahtlos von der versorgerseitigen Datenverarbeitungseinrichtung (8) abrufbar sind.

6. Einrichtung nach einem der vorangehenden Ansprüche, **dadurch gekennzeichnet, dass** die Sende- und Empfangseinrichtung (5a, 5b) zur Gabe eines Alarmsignals in Abhängigkeit eines Verarbeitungsergebnisses ausgebildet ist.

7. Einrichtung nach einem der vorangehenden Ansprüche, **dadurch gekennzeichnet, dass** die Validität der Konfigurationsdaten (KA, KB) zeitlich begrenzt ist.

8. Einrichtung nach einem der vorangehenden Ansprüche, **dadurch gekennzeichnet, dass** die mobile Sende- und Empfangseinrichtung (5a, 5b) ein Handy (6a, 6b) oder ein PDA ist.

9. Verfahren zum Empfangen von mittels eines oder mehrerer Messeinrichtungen gemessener Verbrauchsdaten von Verbrauchsmedien wie Wasser, Gas oder Strom mittels einer mobilen Sende- und Empfangseinrichtung eines Teilnehmers, dem die eine oder mehreren Messeinrichtungen zugeordnet sind, wobei mittels der mobilen Sende- und Empfangseinrichtung über eine Internet-Verbindung von einer von einem die Verbrauchsmedien zur Verfügung stellenden Versorger bereitgestellten Datenverarbeitungseinrichtung teilnehmerspezifische Konfigurationsdaten zum Konfigurieren der mobilen Sende- und Empfangseinrichtung abgerufen werden derart, dass nach einer Übertragung der Konfigurationsdaten (KA,KB) und einer Konfiguration der Sende- und Empfangseinrichtung (5a, 5b) mittels der Konfigurationsdaten (KA, KB) die Sende- und Empfangseinrichtung (5a, 5b) überhaupt erst in der Lage ist, die gesendeten Verbrauchsdaten (VA, VB) zu empfangen und anschließend je nach Konfigration anhand der hierüber definierten Verarbeitungs- und Auswertemöglichkeiten zu verarbeiten, wobei die Konfigurationsdaten (KA, KB) drahtlos über eine Internet-Verbindung (7a, 7b) von der Sende- und Empfangseinrichtung (5a, 5b) abgerufen werden, woraufhin mittels der Sende- und Empfangseinrichtung die von einer Sendeeinrichtung gesendeten Verbrauchsdaten drahtlos empfangen werden, wobei die von der Sendeeinrichtung gesendeten und empfangenen Verbrauchsdaten die Verbrauchsdaten weiterer Teilnehmer umfassen, wobei durch die Konfiguration der Sende- und Empfangseinrichtung (5a, 5b) über die Konfigurationsdaten (KA, KB) sichergestellt wird, dass über die konfigurierte Sende- und Empfangseinrichtung nur die teilnehmerbezogenen Verbrauchsdaten selektiert und verarbeitet werden, wobei eine Kennung verwendet wird, die sowohl seitens der Verbrauchsdaten (VA, VB) als auch innerhalb der Konfigurationsdaten (KA, KB) vorhanden ist, sodass ein Teilnehmer nur seine Verbrauchsdaten (VA, VB) speichern und verarbeiten kann.

10. Verfahren nach Anspruch 9, **dadurch gekennzeichnet, dass** die empfangenen Verbrauchsdaten als übertragbare oder als nicht-übertragbare read-only-Daten gespeichert werden.

11. Verfahren nach einem der Ansprüche 9 oder 10, **dadurch gekennzeichnet, dass** nur ein insbesondere über ein Zeitraster definierter Teil der Verbrauchsdaten gespeichert wird.

12. Verfahren nach einem der Ansprüche 9 bis 11, **dadurch gekennzeichnet, dass** bei Vorliegen eines definierbaren Verarbeitungsergebnisses von der Sende- und Empfangseinrichtung ein Alarmsignal gegeben wird.

13. Verfahren nach einem der Ansprüche 9 bis 12, **dadurch gekennzeichnet, dass** als Sende- und Empfangseinrichtung ein Handy oder ein PDA verwendet wird.

## Claims

1. Device (1) for transmitting and displaying acquired consumption data (VA, VB) relating to a supply medium, comprising one or more measuring devices (2a, 2b, 2c, 3a, 3b, 3c) which are used to acquire the consumption data relating to a medium, are assigned to a user and communicate with a transmitting device (4) for wirelessly transmitting the consumption data (VA, VB), as well as a mobile transmitting and receiving device (5a, 5b) on the user side and a data processing device (8) which is kept available by at least one supplier providing one or more supply media and contains user-specific configuration data (KA, KB) for configuring the transmitting and receiving device (5a, 5b) on the user side in such a manner that, after the configuration data (KA, KB) have been transmitted and the transmitting and receiving device (5a, 5b) has been configured using the configuration data (KA, KB), the transmitting and receiving device (5a, 5b) is able in the first place to receive the transmitted consumption data (VA, VB) and to then process said data, depending on the configuration, on the basis of the processing and evaluation possibilities defined thereby, the configuration data (KA, KB) being able to be wirelessly retrieved by the transmitting and receiving device (5a, 5b) via an Internet connection (7a, 7b), the configuration of the transmitting and receiving device (5a, 5b) using the configuration data (KA, KB) ensuring that, if a plurality of items of consumption data (VA, VB) assigned to users are received, the transmitting and receiving device (5a, 5b) is designed to select and process only the user-related consumption data (VA, VB), an identifier being used that is present both on the part of the consumption data (VA, VB) and also within the configuration data (KA, KB), with the result that a user can store and process only his consumption data (VA, VB).

2. Device according to Claim 1, **characterized in that** the consumption data (VA, VB) are stored in the transmitting and receiving device (5a, 5b) as data which cannot be transmitted or as data which can be transmitted.

3. Device according to Claim 1 or 2, **characterized in that** the transmitting device (4) transmits the consumption data (VA, VB) continuously or intermittently.

4. Device according to one of the preceding claims, **characterized in that** only a part of the consumption data (VA, VB) defined using a configurable time pattern can be stored.

5. Device according to one of the preceding claims, **characterized in that** historical consumption data can be wirelessly retrieved from the data processing device (8) on the supplier side.

6. Device according to one of the preceding claims, **characterized in that** the transmitting and receiving device (5a, 5b) is designed to provide an alarm signal on the basis of a processing result.

7. Device according to one of the preceding claims, **characterized in that** the validity of the configuration data (KA, KB) has a time limit.

8. Device according to one of the preceding claims, **characterized in that** the mobile transmitting and receiving device (5a, 5b) is a mobile phone (6a, 6b) or a PDA.

9. Method for receiving consumption data which are measured using one or more measuring devices and relate to consumption media such as water, gas or electricity by means of a mobile transmitting and receiving device belonging to a user to whom the one or more measuring devices are assigned, user-specific configuration data for configuring the mobile transmitting and receiving device being retrieved by means of the mobile transmitting and receiving device from a data processing device provided by a supplier providing the consumption media via an Internet connection in such a manner that, after the configuration data (KA, KB) have been transmitted and the transmitting and receiving device (5a, 5b) has been configured using the configuration data (KA, KB), the transmitting and receiving device (5a, 5b) is able in the first place to receive the transmitted consumption data (VA, VB) and to then process said data, depending on the configuration, on the basis of the processing and evaluation possibilities defined thereby, the configuration data (KA, KB) being wirelessly retrieved by the transmitting and receiving device (5a, 5b) via an Internet connection (7a, 7b), whereupon the consumption data transmitted by a transmitting device are wirelessly received using the transmitting and receiving device, the consumption data transmitted and received by the transmitting device comprising the consumption data relating to further users, the configuration of the transmitting and receiving device (5a, 5b) using the configuration data (KA, KB) ensuring that only the user-related consumption data are selected and processed using the configured transmitting and receiving device, an identifier being used that is present both on the part of the consumption data (VA, VB) and also within the configuration data (KA, KB), with the result that a user can store and process only his consumption data (VA, VB).

10. Method according to Claim 9, **characterized in that** the received consumption data are stored as read-only data which can be transmitted or as read-only data which cannot be transmitted.

11. Method according to either of Claims 9 and 10, **characterized in that** only a part of the consumption data, in particular a part defined using a time pattern, is stored.

12. Method according to one of Claims 9 to 11, **characterized in that** an alarm signal is provided by the transmitting and receiving device if a definable processing result is present.

13. Method according to one of Claims 9 to 12, **characterized in that** a mobile phone or a PDA is used as the transmitting and receiving device.

## Revendications

1. Dispositif (1) de transmission et d'affichage de données de consommation déterminées (VA, VB) d'une ressource distribuée, comprenant un ou plusieurs dispositifs de mesure servant à la détermination des données de consommation d'une ressource et associés à un participant (2a, 2b, 2c, 3a, 3b, 3c), qui communiquent avec un dispositif émetteur (4) pour la transmission sans fil des données de consommation (VA, VB), de même qu'un dispositif émetteur et récepteur (5a, 5b) mobile situé au niveau du participant et un dispositif de traitement de données (8) détenu au niveau d'un alimentateur mettant à disposition au moins une ou plusieurs ressources distribuées et contenant des données de configuration (KA, KB) spécifiques au participant pour la configuration du dispositif émetteur et récepteur (5a, 5b) situé au niveau du participant de manière à ce que, après une transmission des données de configuration (KA, KB) et une configuration du dispositif émetteur et récepteur (5a, 5b) au moyen des données de configuration (KA, KB), c'est alors seulement que le dispositif émetteur et récepteur (5a, 5b) est en mesure de recevoir les données de consommation (VA, VB) envoyées puis de les traiter en fonction de la configuration à partir des possibilités de traitement et d'exploitation ainsi définies, les données de configuration (KA, KB) étant consultables sans fil via une liaison Internet (7a, 7b) par le dispositif émetteur et récepteur (5a, 5b), dans lequel, par la configuration du dispositif émetteur et récepteur (5a, 5b) à l'aide des données de configuration (KA, KB), il est garanti que, à la réception de données de consommation (VA, VB) associée à plusieurs participants, le dispositif émetteur et récepteur (5a, 5b) est conçu pour sélectionner et traiter exclusivement les données de consommation (VA, VB) relatives au participant, un identifiant étant utilisé, qui est présent de la part des données de consommation (VA, VB) et aussi dans les données de configuration (KA, KB) afin qu'un participant ne puisse enregistrer et traiter que ses données de consommation (VA, VB).

2. Dispositif selon la revendication 1, **caractérisé en ce que** les données de consommation (VA, VB) sont enregistrées sous forme de données non transmissibles ou sous forme de données transmissibles dans le dispositif émetteur et récepteur (5a, 5b).

3. Dispositif selon la revendication 1 ou 2, **caractérisé en ce que** le dispositif émetteur (4) envoie les données de consommation (VA, VB) en continu ou par intermittence.

4. Dispositif selon l'une quelconque des revendications précédentes, **caractérisé en ce que** seule une partie des données de consommation (VA, VB) définies par une trame chronologique configurable peuvent être sauvegardées.

5. Dispositif selon l'une quelconque des revendications précédentes, **caractérisé en ce que** des données de consommation historiques sont consultables sans fil par le dispositif de traitement de données (8) situé au niveau de l'alimentateur.

6. Dispositif selon l'une quelconque des revendications précédentes, **caractérisé en ce que** le dispositif émetteur et récepteur (5a, 5b) est conçu pour émettre un signal d'alarme en fonction d'un résultat de traitement.

7. Dispositif selon l'une quelconque des revendications précédentes, **caractérisé en ce que** la validité des données de configuration (KA, KB) est limitée dans le temps.

8. Dispositif selon l'une quelconque des revendications précédentes, **caractérisé en ce que** le dispositif émetteur et récepteur (5a, 5b) mobile est un téléphone portable (6a, 6b) ou un PDA.

9. Procédé de réception de données de consommation mesurées au moyen d'un ou plusieurs dispositifs de mesure de ressources distribuées comme de l'eau, du gaz ou du courant au moyen d'un dispositif émetteur et récepteur mobile d'un participant auquel sont associés un ou plusieurs dispositifs de mesure, dans lequel des données de configuration spécifiques au participant mises à disposition par un alimentateur mettant les ressources à disposition sont consultées pour la configuration du dispositif émetteur et récepteur mobile de manière à ce que, après une transmission des données de configuration (KA, KB) et une configuration du dispositif émetteur et récepteur (5a, 5b) au moyen des données de configuration (KA, KB), c'est alors seulement que le dispositif émetteur et récepteur (5a, 5b) est en mesure de recevoir les données de consommation envoyées (VA, VB) puis de les traiter en fonction de la configuration à partir des possibilités de traitement et d'exploitation ainsi définies, les données de configuration (KA, KB) étant consultables sans fil via une liaison Internet (7a, 7b) par le dispositif émetteur et récepteur (5a, 5b), suite à quoi, au moyen du dispositif émetteur et récepteur, les données de consommation envoyées par un dispositif émetteur sont reçues sans fil, les données de consommation envoyées par le dispositif émetteur et reçues comprenant d'autres participants, dans lequel, par la configuration du dispositif émetteur et récepteur (5a, 5b) à l'aide des données de configuration (KA, KB), il est garanti que seules les données de consommation relatives au participant sont sélectionnées et traitées par le dispositif émetteur et récepteur configuré, un identifiant étant utilisé, qui est présent de la part des données de consommation (VA, VB) et aussi dans les données de configuration (KA, KB) afin qu'un participant ne puisse enregistrer et traiter que ses données de consommation (VA, VB).

10. Procédé selon la revendication 9, **caractérisé en ce que** les données de consommation reçues sont sauvegardées sous forme de données transmissibles ou non transmissibles pouvant seulement être lues.

11. Procédé selon l'une quelconque des revendications 9 ou 10, **caractérisé en ce que** seule une partie définie en particulier par une trame chronologique des données de consommation est sauvegardée.

12. Procédé selon l'une quelconque des revendications 9 à 11, **caractérisé en ce que**, en présence d'un résultat de traitement définissable, un signal d'alarme est émis par le dispositif émetteur et récepteur.

13. Procédé selon l'une quelconque des revendications 9 à 12, **caractérisé en ce qu'**un téléphone portable ou un PDA est utilisé comme dispositif émetteur et récepteur.
